# EUROPÄISCHE PATENTSCHRIFT

(11) **EP 2 361 812 B1**
(45) Veröffentlichungstag und Bekanntmachung des Hinweises auf die Patenterteilung: **14.11.2012**
(21) Anmeldenummer: 11154377.3
(22) Anmeldetag: 14.02.2011
(51) Int. Cl.: B60T 1/00, B60T 7/04, B60T 7/08, B60T 7/12, B60T 13/66, B60T 13/74, B60T 17/18, F16D 65/14, F16H 61/22, F16H 63/48

(54) **Vorrichtung zur Steuerung einer Parksperre für ein Kraftfahrzeug**
Device for controlling a parking brake for a motor vehicle
Dispositif de commande d'un frein de stationnement pour un véhicule automobile

(30) Priorität: 17.02.2010 DE 102010002020
(43) Veröffentlichungstag der Anmeldung: 31.08.2011
(73) Patentinhaber: Deere & Company, Moline, IL 61265-8098 (US)
(72) Erfinder: Lindsay, Ryan, Moline IL 61265 (US); Thieme, Michael, 67105 Schifferstadt (DE); Münch, Peter, 67105 Schifferstadt (DE)
(74) Vertreter: Dehnhardt, Florian Christopher

(56) Entgegenhaltungen:
- WO-A1-99/26818
- DE-A1-102005 014 242
- DE-A1-102006 026 736
- DE-A1-102006 055 570

## Beschreibung

Die Erfindung betrifft eine Vorrichtung zur Steuerung einer Parksperre für ein Kraftfahrzeug, mit einer ersten Bedieneinrichtung und zumindest einer Steuereinheit, wobei die zumindest eine Steuereinheit die Parksperre bei Erkennung eines an der ersten Bedieneinrichtung vorliegenden Entriegelungswunsches durch Ansteuerung eines ersten elektrischen Stellmittels in eine ausgerückte Position versetzt.

Eine derartige Vorrichtung zur Steuerung einer Parksperre in einem Kraftfahrzeug geht beispielsweise aus der DE 100 52 261 A1 hervor. Die bekannte Vorrichtung weist einen durch ein Ansteuermittel betätigbaren Stellantrieb in Gestalt eines Hydraulikkolbens auf, mittels dessen sich eine von der Parksperre umfasste Verriegelungseinrichtung entgegen einer rückstellenden Kraft in eine ausgerückte Position versetzen und auf diese Weise entriegeln lässt. Das Ansteuermittel ist vorzugsweise als von einer Steuereinheit betätigbares elektromagnetisches Hydraulikventil ausgebildet, wobei die Steuereinheit den Wunsch zur Entriegelung der Parksperre aus einer sensorisch erfassten Stellung eines vom Fahrer zu betätigenden Bedienhebels ableitet. Des Weiteren ist eine mechanische Notbetätigungseinrichtung vorhanden, die es ermöglicht, die Verriegelungseinrichtung mittels eines an einem Kupplungspedal des Kraftfahrzeugs einhängbaren Bowdenzugs in die ausgerückte Position zu versetzen und in dieser zu arretieren.

Aufgrund der für die Notbetätigungseinrichtung erforderlichen zusätzlichen mechanischen Komponenten ist die bekannte Vorrichtung vergleichsweise aufwendig aufgebaut.

Es ist daher Aufgabe der vorliegenden Erfindung, eine Vorrichtung der eingangs genannten Art dahingehend weiterzubilden, dass diese das Vorhandensein einer zusätzlichen mechanischen Notbetätigungseinrichtung entbehrlich macht.

Diese Aufgabe wird durch eine Vorrichtung mit den Merkmalen des Patentanspruchs 1 gelöst.

Die erfindungsgemäße Vorrichtung zur Steuerung einer Parksperre für ein Kraftfahrzeug umfasst eine erste Bedieneinrichtung und zumindest eine Steuereinheit, wobei die zumindest eine Steuereinheit die Parksperre bei Erkennung eines an der ersten Bedieneinrichtung vorliegenden Entriegelungswunsches durch Ansteuerung eines ersten elektrischen Stellmittels in eine ausgerückte Position versetzt. Um die Parksperre zumindest bei einem Defekt der ersten Bedieneinrichtung und/oder des ersten elektrischen Stellmittels entriegeln zu können, ist ferner vorgesehen, dass die zumindest eine Steuereinheit die Parksperre redundant bei Erkennung eines an einer zweiten Bedieneinrichtung vorliegenden Notentriegelungswunsches durch Ansteuerung eines von dem ersten elektrischen Stellmittel unabhängigen zweiten elektrischen Stellmittels in die ausgerückte Position versetzt. Die beiden elektrischen Stellmittel können hierbei baulicher Bestandteil ein und der selben elektrisch betätigbaren Parksperre sein. Eine zusätzliche mechanische Notbetätigungseinrichtung ist in diesem Fall entbehrlich, da die Wahrscheinlichkeit, dass die zumindest eine Steuereinheit bzw. die zweite Bedieneinrichtung und/oder das zweite elektrische Stellmittel gleichfalls einen Defekt aufweist, vernachlässigbar gering ist.

Die Parksperre entspricht vorzugsweise der in EP 1 795 410 B1 dargestellten Ausführungsform. Demgemäß umfasst diese einen Sperrarm, der innerhalb eines an einem Fahrzeuggetriebe anbringbaren Trägergehäuses schwenkbar gelagert ist. Der Sperrarm weist eine Verriegelungsklinke auf, die sich unter dem Einfluss einer federerzeugten Vorspannkraft derart in eine Verzahnung eines Ausgangszahnrads des Fahrzeuggetriebes in Eingriff bringen lässt, dass eine Drehung des Ausgangszahnrads und damit ein unerwünschtes Fortbewegen des Kraftfahrzeugs unterbunden wird. Zur Entriegelung der Parksperre ist ein elektromagnetisches Betätigungselement vorgesehen, das einen an dem Trägergehäuse befestigten Magnetkern umfasst, in dem ein mit einer Kniegelenkanordnung zusammenwirkender Anker zur Betätigung des Sperrarms angeordnet ist. Eine um den Magnetkern gewickelte erste Spule dient der Erzeugung eines Magnetfelds. Der Anker wirkt bei Anlegen des Magnetfelds derart auf die Kniegelenkanordnung ein, dass der Sperrarm entgegen der Vorspannkraft in eine ausgerückte, die Verzahnung des Ausgangszahnrads freigebende Position versetzt wird. Zusätzlich ist eine zweite Spule zur redundanten Entriegelung der Parksperre vorhanden. Diese ist ebenfalls um den Magnetkern des elektromagnetischen Betätigungselements gewickelt. Mit anderen Worten weist das elektromagnetische Betätigungselement zur redundanten Entriegelung der Parksperre ein die erste Spule umfassendes erstes elektrisches Stellmittel und ein die zweite Spule umfassendes zweites elektrisches Stellmittel auf. Wird das Magnetfeld abgeschaltet, so kehrt der Sperrarm unter dem Einfluss der Vorspannkraft selbsttätig aus der ausgerückten in die eingerückte Position zurück. Die Parksperre ist dann wieder verriegelt.

Vorteilhafte Ausgestaltungen der Vorrichtung gehen aus den Unteransprüchen hervor.

Um eine Notentriegelung der Parksperre auch im Falle eines Ausfalls der fahrzeugeigenen Stromversorgung zu ermöglichen, beispielsweise infolge eines unzulänglichen Ladezustands der Fahrzeugbatterie, ist es von Vorteil, wenn an dem Kraftfahrzeug ein von außen zugänglicher Hilfsstromanschluss vorgesehen ist, über den sich die zumindest eine Steuereinheit gemeinsam mit der zweiten Bedieneinrichtung und/oder dem zweiten elektrischen Stellmittel mit Strom versorgen lässt.

Die erste und/oder zweite Bedieneinrichtung umfasst insbesondere einen in zumindest eine Neutral-, Park- oder Fahrstellung verbringbaren, mit einem Fahrzeuggetriebe in Verbindung stehenden Fahrstufenwahlhebel, wobei zumindest ein die momentane Stellung des Fahrstufenwahlhebels indizierender Positionsgeber vorgesehen ist. Das Fahrzeuggetriebe kann beispielsweise als "Infinitely Variable Transmission" (IVT) ausgebildet sein, bei dem ein hydrostatisch oder elektrisch angetriebener Getriebezweig mit einer Vielzahl von mechanisch umschaltbaren Planetengetrieben derart zusammenwirkt, dass sich das Übersetzungsverhältnis des Fahrzeuggetriebes stufenlos verstellen lässt.

Bei einem derartigen Fahrzeuggetriebe wird der Fahrstufenwahlhebel zur Fahrtaufnahme, d.h. zur Durchführung einer Vorwärts- oder Rückwärtsfahrt ausgehend von der Parkstellung in die Neutralstellung und von dort in die entsprechende Fahrstellung verbracht. Dementsprechend besteht die Möglichkeit, dass die zumindest eine Steuereinheit auf das Vorliegen eines Entriegelungswunsches schließt, wenn sich aufgrund einer von dem Positionsgeber bereitgestellten Positionsinformation ergibt, dass der Fahrstufenwahlhebel vom Fahrer von der Park- in die Neutralstellung verbracht wird.

Zusätzlich zur Neutralstellung kann der Fahrstufenwahlhebel eine "Power Zero"-Stellung aufweisen, die ein Ausrollen des Kraftfahrzeugs in den Stillstand erlaubt, wobei die Parksperre nach Erreichen des Stillstands und nach anschließendem Ablauf einer vorgegebenen Sicherheitszeit selbsttätig aus der ausgerückten in die eingerückte Position versetzt wird.

Die erste Bedieneinrichtung kann zumindest einen die Parkstellung des Fahrstufenwahlhebels indizierenden ersten Positionsgeber und einen die Neutralstellung des Fahrstufenwahlhebels indizierenden zweiten Positionsgeber aufweisen, wobei die zumindest eine Steuereinheit die von den beiden Positionsgebern bereitgestellten Positionsinformationen zur Verifizierung der momentanen Stellung des Fahrstufenwahlhebels miteinander vergleicht. Die Positionsgeber sind insbesondere als Hallsensoren ausgebildet. Ein mit dem Fahrstufenwahlhebel mitbewegtes Bauteil trägt einen oder mehrere Permanentmagnete, die derart angeordnet sind, dass die Hallsensoren mit einer von der momentanen Stellung des Fahrstufenwahlhebels in eindeutiger Weise zusammenhängenden Magnetfeldstärke beaufschlagt werden. Jeder der Hallsensoren erzeugt eine Positionsinformation in Gestalt eines von der jeweiligen Magnetfeldstärke abhängigen Spannungssignals, wobei durch Auswertung des jeweiligen Betrags bzw. Verlaufs der Spannungssignale sowie durch Vergleich deren zeitlicher Beziehung zueinander eine verlässliche Ermittlung der momentanen Stellung des Fahrstufenwahlhebels möglich ist.

Vorzugsweise schließt die zumindest eine Steuereinheit auf das Vorliegen eines Notentriegelungswunsches, wenn die zweite Bedieneinrichtung unter Einhaltung einer vorgegebenen Bedienabfolge im Sinne eines einzugebenden "Entriegelungscodes" betätigt wird. Auf diese Weise kann einer unbeabsichtigten bzw. versehentlichen Notentriegelung der Parksperre seitens des Fahrers sicher vorgebeugt werden.

Insbesondere kann die zweite Bedieneinrichtung ein mit einer Getriebekupplung und/oder einer Fahrzeugbremsanlage zusammenwirkendes Bedienpedal umfassen, wobei zumindest ein den momentanen Betätigungszustand des Bedienpedals erfassender Betätigungsgeber vorgesehen ist. Genauer gesagt kann das Bedienpedal zum Öffnen bzw. Schließen einer Getriebekupplung bzw. zur Ansteuerung von mit Fahrzeugrädern zusammenwirkenden Radbremseinrichtungen dienen. Bei dem Betätigungsgeber handelt es sich beispielsweise um einen als Potentiometer ausgebildeten Stellwiderstand, mittels dessen sich eine fahrerseitige Auslenkung des Bedienpedals erfassen und in eine Betätigungsinformation in Gestalt eines entsprechenden Stellsignals umwandeln lässt.

Des Weiteren besteht die Möglichkeit, dass die zweite Bedieneinrichtung einen zumindest die Park- und/oder Neutralstellung des Fahrstufenwahlhebels indizierenden dritten Positionsgeber aufweist, wobei die zumindest eine Steuereinheit auf das Vorliegen eines Notentriegelungswunsches schließt, wenn sich durch Auswertung einer von dem dritten Positionsgeber bereitgestellten Positionsinformation in Verbindung mit einer von dem Betätigungsgeber bereitgestellten Betätigungsinformation ergibt, dass der Fahrstufenwahlhebel bei zugleich vorliegender fahrerseitiger Betätigung des Bedienpedals von der Park- in die Neutralstellung verbracht wird. Mit anderen Worten erfolgt mittels des dritten Positionsgebers eine redundante Erfassung der momentanen Stellung des Fahrstufenwahlhebels. Bei dem dritten Positionsgeber handelt es sich im einfachsten Fall um einen Mikroschalter, der beim Herausbewegen des Fahrstufenwahlhebels aus der Parkstellung betätigt wird und dabei eine Positionsinformation in Gestalt eines entsprechenden Umschaltsignals erzeugt.

Um eine unbeabsichtigte Notentriegelung auszuschließen, ist es denkbar, dass die zumindest eine Steuereinheit die Parksperre ausschließlich dann in die ausgerückte Position versetzt, wenn sich diese in einem manuell anwählbaren Notentriegelungsmodus befindet. Der Notentriegelungsmodus kann beispielsweise über einen in einem Fahrzeugsicherungskasten untergebrachten Überbrückungsschalter ausgewählt werden. Der Überbrückungsschalter weist insbesondere einen Kontaktsockel sowie eine in unterschiedlichen Positionen auf den Kontaktsockel von Hand aufsteckbare Kontaktbrücke auf, wobei die Auswahl des Notentriegelungsmodus durch Aufstecken der Kontaktbrücke in einer eigens dafür vorgesehenen Position erfolgt.

Vorzugsweise werden die Positionsinformationen des ersten und zweiten Positionsgebers redundant über eine Busverbindung, insbesondere über einen in dem Kraftfahrzeug vorhandenen CAN-Datenbus, an die zumindest eine Steuereinheit übertragen. Genauer gesagt erfolgt die Übertragung der von den beiden Positionsgebern erzeugten Positionsinformationen an die zumindest eine Steuereinheit einerseits unmittelbar und andererseits nach vorheriger Umwandlung durch einen zwischengeschalteten CAN-Treiber. Durch Vergleich der auf unterschiedlichen Wegen übermittelten Positionsinformationen kann eine fehlerhafte Informationsübertragung zwischen den beiden Positionsgebern und der zumindest einen Steuereinheit erkannt werden.

Im Sinne einer möglichst hohen Ausfallsicherheit der erfindungsgemäßen Vorrichtung sind der ersten und zweiten Bedieneinrichtung zur redundanten Ansteuerung des ersten und zweiten elektrischen Stellmittels voneinander unabhängige Steuereinheiten zugeordnet. Insofern werden zwei voneinander unabhängige Steuerpfade zur Betätigung der Parksperre geschaffen, wobei das erste elektrische Stellmittel von der ersten Steuereinheit und das zweite elektrische Stellmittel von der zweiten Steuereinheit angesteuert wird.

Die beiden Steuereinheiten können hierbei über eine Busverbindung, insbesondere über einen in dem Kraftfahrzeug vorhandenen CAN-Datenbus, miteinander kommunizieren. Dies erlaubt eine gegenseitige Funktionsüberwachung der Steuereinheiten. Wird ein fehlerhafter Betrieb einer der beiden Steuereinheiten erkannt, so kann die Ausgabe einer entsprechenden Fehlermeldung an den Fahrer erfolgen, beispielsweise mittels einer in der Fahrerkabine des Kraftfahrzeugs befindlichen Anzeigeeinheit.

Ferner besteht die Möglichkeit, dass die Bedieneinrichtungen, die Steuereinheiten und/oder die elektrischen Stellmittel aus zumindest zwei voneinander unabhängigen Stromversorgungszweigen gespeist werden. Jedem der Stromversorgungszweige ist zu diesem Zweck eine eigene Spannungsstabilisierungsschaltung zugeordnet, wobei die Spannungsstabilisierungsschaltungen ihrerseits aus der Fahrzeugbatterie mit elektrischer Energie versorgt werden.

Um einem unerwünschten Verschleiß der Parksperre vorzubeugen, ist es darüber hinaus denkbar, dass zumindest ein Radrehzahlsensor zur Erfassung des momentanen Bewegungszustands des Kraftfahrzeugs vorgesehen ist, wobei die zumindest eine Steuereinheit die Parksperre ausschließlich dann aus der ausgerückten in die eingerückte Position versetzt, wenn sich aufgrund einer von dem zumindest einen Raddrehzahlsensor bereitgestellten Drehzahlinformation ergibt, dass sich das Kraftfahrzeug im Stillstand befindet.

Vorzugsweise sind mehrere derartige Raddrehzahlsensoren vorgesehen, wobei die zumindest eine Steuereinheit die von den Raddrehzahlsensoren bereitgestellten Drehzahlinformationen zum Zwecke ihrer gegenseitigen Verifizierung miteinander vergleicht. In diesem Fall lässt sich auch bei einem fehlerhaften Betrieb einer der Raddrehzahlsensoren eine verlässliche Aussage über den momentanen Bewegungszustand des Kraftfahrzeugs, insbesondere über dessen Stillstand, treffen.

Die erfindungsgemäße Vorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein schematisch dargestelltes Ausführungsbeispiel der erfindungsgemäßen Vorrichtung zur Steuerung einer Parksperre für ein Kraftfahrzeug,
- Fig. 2: ein schematisch dargestelltes Ausführungsbeispiel einer Parksperre für ein Kraftfahrzeug,
- Fig. 3: ein Flussdiagramm, das ein Verfahren zur Entriegelung der Parksperre wiedergibt, und
- Fig. 4: ein Flussdiagramm, das ein Verfahren zur Notentriegelung der Parksperre wiedergibt.

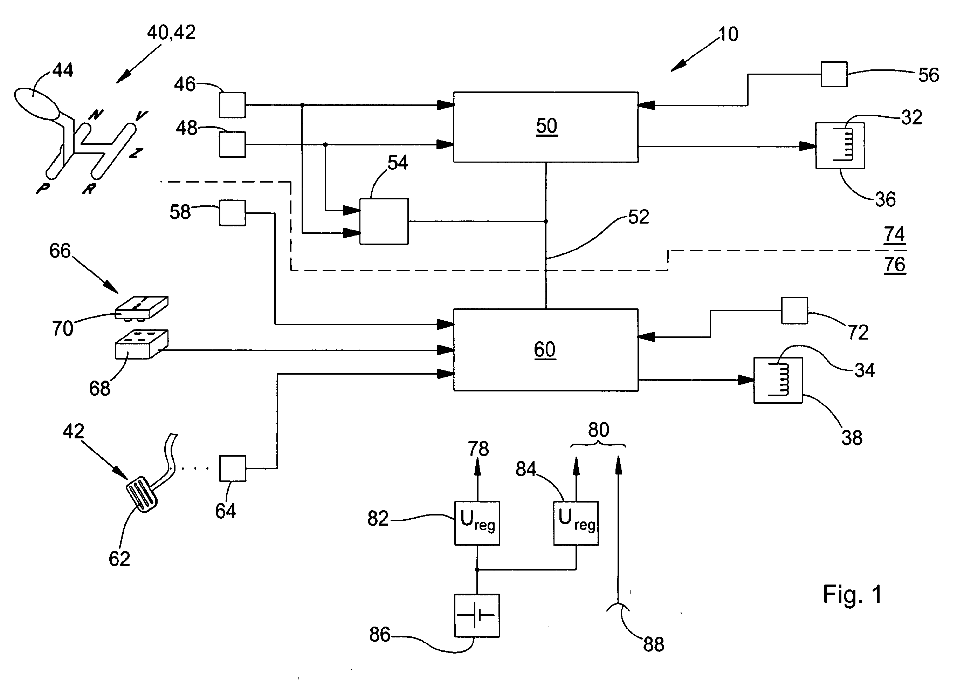

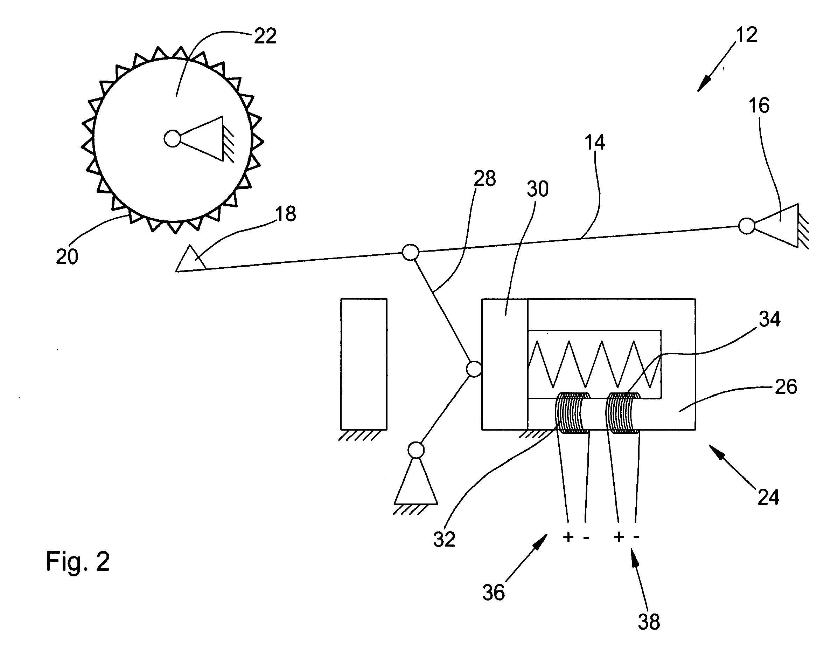

Fig. 1 zeigt ein schematisch dargestelltes Ausführungsbeispiel der erfindungsgemäßen Vorrichtung zur Steuerung einer in Fig. 2 dargestellten Parksperre für ein Kraftfahrzeug. Bei dem Kraftfahrzeug handelt es sich insbesondere um ein landwirtschaftliches oder industrielles Nutzfahrzeug, beispielsweise um einen Traktor, eine Erntemaschine, einen Feldhäcksler, eine selbstfahrende Spritzmaschine oder eine Baumaschine.

Die mittels der erfindungsgemäßen Vorrichtung 10 ansteuerbare Parksperre 12 entspricht der in EP 1 795 410 B1 dargestellten Ausführungsform. Demgemäß umfasst diese einen Sperrarm 14, der innerhalb eines an einem Fahrzeuggetriebe anbringbaren Trägergehäuses 16 schwenkbar gelagert ist. Der Sperrarm 14 weist eine Verriegelungsklinke 18 auf, die sich unter dem Einfluss einer federerzeugten Vorspannkraft derart in eine Verzahnung 20 eines Ausgangszahnrads 22 des Fahrzeuggetriebes in Eingriff bringen lässt, dass eine Drehung des Ausgangszahnrads 22 und damit ein unerwünschtes Fortbewegen des Kraftfahrzeugs unterbunden wird. Zur Entriegelung der Parksperre 12 ist ein elektromagnetisches Betätigungselement 24 vorgesehen, das einen an dem Trägergehäuse 16 befestigten Magnetkern 26 umfasst, in dem ein mit einer Kniegelenkanordnung 28 zusammenwirkender Anker 30 zur Betätigung des Sperrarms 14 angeordnet ist. Eine um den Magnetkern 26 gewickelte erste Spule 32 dient der Erzeugung eines Magnetfelds. Der Anker 30 wirkt bei Anlegen des Magnetfelds derart auf die Kniegelenkanordnung 28 ein, dass der Sperrarm 14 entgegen der Vorspannkraft in eine ausgerückte, die Verzahnung 20 des Ausgangszahnrads 22 freigebende Position versetzt wird. Zusätzlich ist eine zweite Spule 34 zur redundanten Entriegelung der Parksperre 12 vorhanden. Diese ist ebenfalls um den Magnetkern 26 des elektromagnetischen Betätigungselements 24 gewickelt. Mit anderen Worten weist das elektromagnetische Betätigungselement 24 zur redundanten Entriegelung der Parksperre 12 ein die erste Spule 32 umfassendes erstes elektrisches Stellmittel 36 und ein die zweite Spule 34 umfassendes zweites elektrisches Stellmittel 38 auf. Wird das Magnetfeld abgeschaltet, so kehrt der Sperrarm 14 unter dem Einfluss der Vorspannkraft selbsttätig aus der ausgerückten in die eingerückte Position zurück. Die Parksperre 12 ist dann wieder verriegelt.

Des Weiteren ist eine erste Bedieneinrichtung 40 und eine zweite Bedieneinrichtung 42 vorgesehen, wobei diese innerhalb einer von dem Kraftfahrzeug umfassten Fahrerkabine angeordnet sind.

Ein in zumindest eine Neutral-, Park- oder Fahrstellung verbringbarer, mit dem Fahrzeuggetriebe in Verbindung stehender Fahrstufenwahlhebel 44 ist gemeinsamer Bestandteil sowohl der ersten Bedieneinrichtung 40 als auch der zweiten Bedieneinrichtung 42. Das Fahrzeuggetriebe ist im vorliegenden Fall als "Infinitely Variable Transmission" (IVT) ausgebildet, bei dem ein hydrostatisch oder elektrisch angetriebener Getriebezweig mit einer Vielzahl von mechanisch umschaltbaren Planetengetrieben derart zusammenwirkt, dass sich das Übersetzungsverhältnis des Fahrzeuggetriebes stufenlos verstellen lässt.

Die erste Bedieneinrichtung 40 weist einen die Parkstellung des Fahrstufenwahlhebels 44 indizierenden ersten Positionsgeber 46 und einen die Neutralstellung des Fahrstufenwahlhebels 44 indizierenden zweiten Positionsgeber 48 auf. Die Positionsgeber 46 und 48 sind als Hallsensoren ausgebildet. Ein mit dem Fahrstufenwahlhebel 44 mitbewegtes Bauteil trägt einen oder mehrere Permanentmagnete, die derart angeordnet sind, dass die Hallsensoren mit einer von der momentanen Stellung des Fahrstufenwahlhebels 44 in eindeutiger Weise zusammenhängenden Magnetfeldstärke beaufschlagt werden. Jeder der Hallsensoren erzeugt eine Positionsinformation in Gestalt eines von der jeweiligen Magnetfeldstärke abhängigen Spannungssignals. Die von den beiden Positionsgebern 46 und 48 bereitgestellten Spannungssignale werden anschließend einer ersten Steuereinheit 50 zugeführt und von dieser zur Ermittlung und anschließenden Verifizierung der momentanen Stellung des Fahrstufenwahlhebels 44 miteinander verglichen. Hierzu erfolgt neben der Auswertung des jeweiligen Betrags bzw. zeitlichen Verlaufs der Spannungssignale ein Vergleich deren zeitlicher Beziehung zueinander.
Die Positionsinformationen des ersten und zweiten Positionsgebers 46 und 48 werden redundant über eine Busverbindung 52 an die erste Steuereinheit 50 übertragen. Bei der Busverbindung 52 handelt es sich im vorliegenden Fall um einen in dem Kraftfahrzeug vorhandenen CAN-Datenbus. Genauer gesagt erfolgt die Übertragung der von den beiden Positionsgebern 46 und 48 erzeugten Positionsinformationen an die erste Steuereinheit 50 einerseits unmittelbar und andererseits nach vorheriger Umwandlung durch einen zwischengeschalteten CAN-Treiber 54, sodass durch Vergleich der auf unterschiedlichen Wegen übermittelten Positionsinformationen eine fehlerhafte Informationsübertragung zwischen den beiden Positionsgebern 46 und 48 und der ersten Steuereinheit 50 erkannt werden kann.

Ein erster Raddrehzahlsensor 56 dient der Erfassung des momentanen Bewegungszustands des Kraftfahrzeugs. Der erste Raddrehzahlsensor 56 übermittelt hierzu an die erste Steuereinheit 50 eine Drehzahlinformation bezüglich der an einer ersten Radachse des Kraftfahrzeugs vorliegenden Raddrehzahl.

Des Weiteren weist die zweite Bedieneinrichtung 42 einen die Park- und/oder Neutralstellung des Fahrstufenwahlhebels 44 indizierenden dritten Positionsgeber 58 auf, mittels dessen eine redundante Erfassung der momentanen Stellung des Fahrstufenwahlhebels 44 erfolgt. Bei dem dritten Positionsgeber 58 handelt es sich um einen Mikroschalter, der beim Herausbewegen des Fahrstufenwahlhebels 44 aus der Parkstellung betätigt wird und dabei eine Positionsinformation in Gestalt eines entsprechenden Umschaltsignals erzeugt, das einer zweiten Steuereinheit 60 zur Auswertung zugeführt wird.
Die zweite Bedieneinrichtung 42 umfasst neben dem Fahrstufenwahlhebel 44 ein mit einer Getriebekupplung und/oder einer Fahrzeugbremsanlage zusammenwirkendes Bedienpedal 62, wobei ein den momentanen Betätigungszustand des Bedienpedals 62 erfassender Betätigungsgeber 64 vorgesehen ist. Bei dem Betätigungsgeber 64 handelt es sich um einen als Potentiometer ausgebildeten Stellwiderstand, mittels dessen eine fahrerseitige Auslenkung des Bedienpedals 62 erfasst und in eine Betätigungsinformation in Gestalt eines entsprechenden Stellsignals umgewandelt wird, das der zweite Steuereinheit 60 zur Auswertung zugeführt wird.

Ferner ist ein in einem Fahrzeugsicherungskasten untergebrachter Überbrückungsschalter 66 vorgesehen. Der mit der zweiten Steuereinheit 60 verbundene Überbrückungsschalter 66 weist einen Kontaktsockel 68 sowie eine in unterschiedlichen Positionen auf den Kontaktsockel 68 von Hand aufsteckbare Kontaktbrücke 70 auf.

Ein zweiter Raddrehzahlsensor 72 dient der redundanten Erfassung des momentanen Bewegungszustands des Kraftfahrzeugs. Der zweite Raddrehzahlsensor 72 übermittelt hierzu an die zweite Steuereinheit 60 eine Drehzahlinformation bezüglich der an einer zweiten Radachse des Kraftfahrzeugs vorliegenden Raddrehzahl.

Beispielsgemäß sind der ersten und zweiten Bedieneinrichtung 40 und 42 zur redundanten Ansteuerung des ersten und zweiten elektrischen Stellmittels 36 und 38 voneinander unabhängige Steuereinheiten 50 und 60 zugeordnet. Insofern werden zwei voneinander unabhängige Steuerpfade 74 und 76 zur Betätigung der Parksperre 12 bereitgestellt, wobei das erste elektrische Stellmittel 36 von der ersten Steuereinheit 50 und das zweite elektrische Stellmittel 38 von der zweiten Steuereinheit 60 angesteuert wird.

Die beiden Steuereinheiten 50 und 60 kommunizieren hierbei zum Zwecke der gegenseitigen Funktionsüberwachung über die Busverbindung 52 miteinander. Wird ein fehlerhafter Betrieb einer der beiden Steuereinheiten 50 und 60 erkannt, erfolgt die Ausgabe einer entsprechenden Fehlermeldung an den Fahrer, beispielsweise mittels einer in der Fahrerkabine des Kraftfahrzeugs befindlichen Anzeigeeinheit.

Die Bedieneinrichtungen 40 und 42, die Steuereinheiten 50 und 60 und/oder die elektrischen Stellmittel 36 und 38 werden aus voneinander unabhängigen Stromversorgungszweigen 78 und 80 gespeist. Jedem der Stromversorgungszweige 78 und 80 ist zu diesem Zweck eine eigene Spannungsstabilisierungsschaltung 82 und 84 zugeordnet, wobei die Spannungsstabilisierungsschaltungen 82 und 84 ihrerseits aus der Fahrzeugbatterie 86 mit elektrischer Energie versorgt werden.

Zusätzlich ist ein an dem Kraftfahrzeug von außen zugänglicher Hilfsstromanschluss 88 vorgesehen, über den sich die zweite Steuereinheit 60 gemeinsam mit der zweiten Bedieneinrichtung 42 bzw. dem zweiten elektrischen Stellmittel 38 für den Fall eines unzulänglichen Ladezustands der Fahrzeugbatterie 86 mit Strom versorgen lässt.

Abweichend von dem zuvor dargestellten Ausführungsbeispiel der erfindungsgemäßen Vorrichtung 10 ist es auch vorstellbar, anstelle der ersten und zweiten Steuereinheit 50 und 60 lediglich eine einzelne Steuereinheit, sowie anstelle des ersten und zweiten Positionsgebers 46 und 48 lediglich einen einzelnen, die momentane Stellung des Fahrstufenwahlhebels 44 indizierenden Positionsgeber vorzusehen. Im Sinne einer möglichst hohen Ausfallsicherheit der erfindungsgemäßen Vorrichtung 10 wird jedoch eine Betätigung der Parksperre 12 mittels zweier voneinander unabhängiger Steuerpfade 74 und 76 bevorzugt.

Nachfolgend soll die Funktionsweise der erfindungsgemäßen Vorrichtung 10 näher erläutert werden.

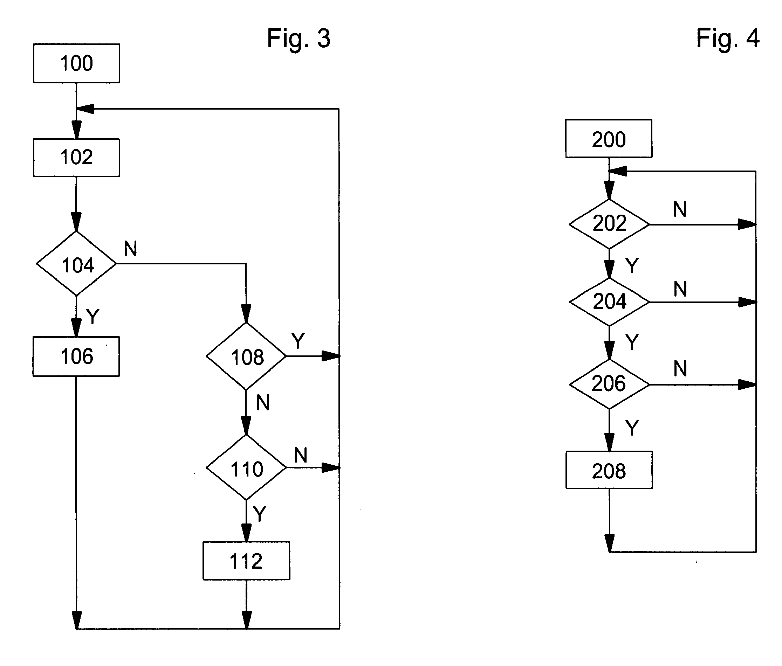

Fig. 3 zeigt ein Flussdiagramm, das ein Verfahren zur Entriegelung der Parksperre wiedergibt.

Das in der ersten Steuereinheit 50 periodisch ablaufende Verfahren wird in einem Initialisierungsschritt 100 gestartet. In einem auf den Initialisierungsschritt 100 folgenden ersten Schritt 102 ermittelt die erste Steuereinheit 50 durch Auswertung der von dem ersten und zweiten Positionsgebern 46 und 48 bereitgestellten Positionsinformationen die momentane Stellung des Fahrstufenwahlhebels 44.

Wie eingangs erwähnt, ist das Fahrzeuggetriebe als bezüglich seines Übersetzungsverhältnisses stufenlos verstellbares IVT ausgebildet. Bei einem derartigen Fahrzeuggetriebe wird der Fahrstufenwahlhebel 44 zur Fahrtaufnahme, d.h. zur Durchführung einer Vorwärts- oder Rückwärtsfahrt ausgehend von der Parkstellung in die Neutralstellung und von dort in die entsprechende Fahrstellung verbracht.

Ergibt sich daher in einem zweiten Schritt 104 aufgrund der im ersten Schritt 102 durchgeführten Auswertung der Positionsinformationen, dass der Fahrstufenwahlhebel 44 innerhalb einer vorgegebenen Totzeit aus der Parkstellung herausbewegt und in die Neutralstellung verbracht wird, so wird auf das Vorliegen eines Entriegelungswunsches geschlossen und die Parksperre 12 durch entsprechende Ansteuerung des ersten elektrischen Stellmittels 36 in einem dritten Schritt 106 in die ausgerückte Position versetzt.

Wird hingegen im zweiten Schritt 104 festgestellt, dass die Totzeit überschritten ist bzw. der Fahrstufenwahlhebel 44 nicht aus der Parkstellung herausbewegt wird, so wird in einem vierten Schritt 108 überprüft, ob sich die Parksperre 12 in der eingerückten Position befindet. Ist dies der Fall, so kehrt das Verfahren zum ersten Schritt 102 zurück. Andernfalls wird in einem fünften Schritt 110 der Bewegungszustand des Kraftfahrzeugs ermittelt, was durch Auswertung der von dem ersten Raddrehzahlsensor 56 bereitgestellten Drehzahlinformation sowie der über die Busverbindung 52 von dem zweiten Raddrehzahlsensor 72 bereitgestellten Drehzahlinformation erfolgt. Befindet sich das Kraftfahrzeug im Stillstand, was seitens der ersten Steuereinheit 50 durch Vergleich der Drehzahlinformationen des ersten und zweiten Raddrehzahlsensors 56 und 72 zusätzlich verifiziert wird, so wird die Parksperre 12 in einem sechsten Schritt 112 aus der ausgerückten in die eingerückte Position versetzt. Andernfalls kehrt das Verfahren unmittelbar zum ersten Schritt 102 zurück.

Eine ähnliche Vorgehensweise bei der Verriegelung der Parksperre 12 kann auch für den Fall vorgesehen sein, dass der Fahrstufenwahlhebel 44 zusätzlich zur Neutralstellung eine "Power Zero"-Stellung aufweist, die ein Ausrollen des Kraftfahrzeugs in den Stillstand erlaubt. In diesem Fall wird die Parksperre 12 nach Erreichen des Stillstands und nach anschließendem Ablauf einer vorgegebenen Sicherheitszeit aus der ausgerückten in die eingerückte Position versetzt.

Unter Umständen ist eine Entriegelung der Parksperre 12 in der vorstehend beschriebenen Art und Weise nicht möglich, beispielsweise aufgrund eines Defekts der ersten Bedieneinrichtung 40, insbesondere der von dieser umfassten Positionsgeber 46 und 48, bzw. der ersten Steuereinheit 50 und/oder des ersten elektrischen Stellmittels 36. In diesem Fall erlaubt das nachfolgend beschriebene Verfahren eine Notentriegelung der Parksperre 12.

Fig. 4 zeigt ein Flussdiagramm, das ein Verfahren zur Notentriegelung der Parksperre wiedergibt.

Um eine unbeabsichtigte Notentriegelung auszuschließen, wird das in der zweiten Steuereinheit 60 periodisch ablaufende Verfahren ausschließlich dann gestartet, wenn sich die Parksperre 12 in einem manuell auswählbaren Notentriegelungsmodus befindet. Die Auswahl des Notentriegelungsmodus erfolgt an dem Überbrückungsschalter 66 durch Aufstecken der Kontaktbrücke 70 in einer eigens dafür vorgesehenen Position.

Ist der Notentriegelungsmodus am Überbrückungsschalter 66 ausgewählt, so überprüft die zweite Steuereinheit 60 in einem auf einen Initialisierungsschritt 200 folgenden ersten Schritt 202 durch Auswertung der von dem Betätigungsgeber 64 bereitgestellten Betätigungsinformation bzw. der von dem dritten Positionsgeber 58 bereitgestellten Positionsinformation, ob sich das Bedienpedal 62 in unbetätigtem Zustand bzw. der Fahrstufenwahlhebel 44 in der Parkstellung befindet. Ist beides der Fall, so wird mit einem zweiten Schritt 204 fortgefahren, in dem durch Auswertung der von dem Betätigungsgeber 64 bereitgestellten Betätigungsinformation überprüft wird, ob der Fahrer das Bedienpedal 62 bei in der Parkstellung verbleibendem Fahrstufenwahlhebel 44 innerhalb einer vorgegebenen Totzeit auslenkt. Andernfalls kehrt das Verfahren zum ersten Schritt 202 zurück.

Erkennt die zweite Steuereinheit 60 das Vorliegen der im zweiten Schritt 204 überprüften Bedienabfolge des Bedienpedals 62 bzw. des Fahrstufenwahlhebels 44, so wird in einem dritten Schritt 206 durch Auswertung der von dem dritten Positionsgeber 58 bereitgestellten Positionsinformation ermittelt, ob der Fahrstufenwahlhebel 44 innerhalb einer vorgegebenen Totzeit aus der Parkstellung in die Neutralstellung verbracht wird. Sollte dies der Fall sein, so schließt die zweite Steuereinheit 60 auf das Vorliegen eines Notentriegelungswunsches und die Parksperre 12 wird durch entsprechende Ansteuerung des zweiten elektrischen Stellmittels 38 in einem vierten Schritt 208 in die ausgerückte Position versetzt. Andernfalls unterbleibt die Ansteuerung des zweiten elektrischen Stellmittels 38, und das Verfahren kehrt zum ersten Schritt 202 zurück.

Mit anderen Worten schließt die zweite Steuereinheit 60 auf das Vorliegen eines Notentriegelungswunsches, wenn sich durch Auswertung einer von dem dritten Positionsgeber 58 bereitgestellten Positionsinformation in Verbindung mit einer von dem Betätigungsgeber 64 bereitgestellten Betätigungsinformation ergibt, dass der Fahrstufenwahlhebel 44 bei zugleich vorliegender fahrerseitiger Auslenkung des Bedienpedals 62 von der Park- in die Neutralstellung verbracht wird. Die zweite Bedieneinrichtung 42 ist insofern unter Einhaltung einer vorgegebenen Bedienabfolge im Sinne eines einzugebenden "Entriegelungscodes" zu betätigen. Auf diese Weise kann einer unbeabsichtigten bzw. versehentlichen Notentriegelung der Parksperre 12 seitens des Fahrers sicher vorgebeugt werden.

Zusammengefasst weist die erfindungsgemäße Vorrichtung zur Steuerung einer Parksperre für ein Kraftfahrzeug somit eine erste Bedieneinrichtung und zumindest eine Steuereinheit auf, wobei die zumindest eine Steuereinheit die Parksperre bei Erkennung eines an der ersten Bedieneinrichtung vorliegenden Entriegelungswunsches durch Ansteuerung eines ersten elektrischen Stellmittels in eine ausgerückte Position versetzt. Um die Parksperre zumindest bei einem Defekt der ersten Bedieneinrichtung und/oder des ersten elektrischen Stellmittels entriegeln zu können, ist ferner vorgesehen, dass die zumindest eine Steuereinheit die Parksperre redundant bei Erkennung eines an einer zweiten Bedieneinrichtung vorliegenden Notentriegelungswunsches durch Ansteuerung eines von dem ersten elektrischen Stellmittel unabhängigen zweiten elektrischen Stellmittels in die ausgerückte Position versetzt.

## Patentansprüche

1. Vorrichtung zur Steuerung einer Parksperre für ein Kraftfahrzeug, mit einer ersten Bedieneinrichtung (40) und zumindest einer Steuereinheit (50, 60), wobei die zumindest eine Steuereinheit (50) die Parksperre (12) bei Erkennung eines an der ersten Bedieneinrichtung (40) vorliegenden Entriegelungswunsches durch Ansteuerung eines ersten elektrischen Stellmittels (36) in eine ausgerückte Position versetzt, **dadurch gekennzeichnet, dass** die zumindest eine Steuereinheit (60) die Parksperre (12) redundant bei Erkennung eines an einer zweiten Bedieneinrichtung (42) vorliegenden Notentriegelungswunsches durch Ansteuerung eines von dem ersten elektrischen Stellmittel (36) unabhängigen zweiten elektrischen Stellmittels (38) in die ausgerückte Position versetzt.

2. Vorrichtung nach Anspruch 1, **dadurch gekennzeichnet, dass** an dem Kraftfahrzeug ein von außen zugänglicher Hilfsstromanschluss (88) vorgesehen ist, über den sich die zumindest eine Steuereinheit (60) gemeinsam mit der zweiten Bedieneinrichtung (42) und/oder dem zweiten elektrischen Stellmittel (38) mit Strom versorgen lässt.

3. Vorrichtung nach Anspruch 1 oder 2, **dadurch gekennzeichnet, dass** die erste und/oder zweite Bedieneinrichtung (40, 42) einen in zumindest eine Neutral-, Park- oder Fahrstellung verbringbaren, mit einem Fahrzeuggetriebe zusammenwirkenden Fahrstufenwahlhebel (44) umfasst, wobei zumindest ein die momentane Stellung des Fahrstufenwahlhebels (44) indizierender Positionsgeber (46, 48, 58) vorgesehen ist.

4. Vorrichtung nach einem der Ansprüche 1 bis 3, **dadurch gekennzeichnet, dass** die zumindest eine Steuereinheit (50) auf das Vorliegen eines Entriegelungswunsches schließt, wenn sich aufgrund einer von dem Positionsgeber (46, 48) bereitgestellten Positionsinformation ergibt, dass der Fahrstufenwahlhebel (44) von der Park- in die Neutralstellung verbracht wird.

5. Vorrichtung nach einem der Ansprüche 1 bis 4, **dadurch gekennzeichnet, dass** die erste Bedieneinrichtung (40) zumindest einen die Parkstellung des Fahrstufenwahlhebels (44) indizierenden ersten Positionsgeber (46) und einen die Neutralstellung des Fahrstufenwahlhebels (44) indizierenden zweiten Positionsgeber (48) aufweist, wobei die zumindest eine Steuereinheit (50) die von den beiden Positionsgebern (46, 48) bereitgestellten Positionsinformationen zur Verifizierung der momentanen Stellung des Fahrstufenwahlhebels (44) miteinander vergleicht.

6. Vorrichtung nach einem der Ansprüche 1 bis 5, **dadurch gekennzeichnet, dass** die zumindest eine Steuereinheit (60) auf das Vorliegen eines Notentriegelungswunsches schließt, wenn die zweite Bedieneinrichtung (42) unter Einhaltung einer vorgegebenen Bedienabfolge betätigt wird.

7. Vorrichtung nach einem der Ansprüche 1 bis 6, **dadurch gekennzeichnet, dass** die zweite Bedieneinrichtung (42) ein mit einer Getriebekupplung und/oder einer Fahrzeugbremsanlage zusammenwirkendes Bedienpedal (62) umfasst, wobei zumindest ein den momentanen Betätigungszustand des Bedienpedals (62) erfassender Betätigungsgeber (64) vorgesehen ist.

8. Vorrichtung nach einem der Ansprüche 1 bis 7, **dadurch gekennzeichnet, dass** die zweite Bedieneinrichtung (42) einen zumindest die Park- und/oder Neutralstellung des Fahrstufenwahlhebels (44) indizierenden dritten Positionsgeber (58) aufweist, wobei die zumindest eine Steuereinheit (60) auf das Vorliegen eines Notentriegelungswunsches schließt, wenn sich aufgrund einer von dem dritten Positionsgeber (58) bereitgestellten Positionsinformation in Verbindung mit einer von dem Betätigungsgeber (64) bereitgestellten Betätigungsinformation ergibt, dass der Fahrstufenwahlhebel (44) bei zugleich vorliegender fahrerseitiger Betätigung des Bedienpedals (62) von der Park- in die Neutralstellung verbracht wird.

9. Vorrichtung nach einem der Ansprüche 1 bis 8, **dadurch gekennzeichnet, dass** die zumindest eine Steuereinheit (60) die Parksperre (12) ausschließlich dann in die ausgerückte Position versetzt, wenn sich diese in einem manuell anwählbaren Notentriegelungsmodus befindet.

10. Vorrichtung nach einem der Ansprüche 1 bis 9, **dadurch gekennzeichnet, dass** die Positionsinformationen des ersten und zweiten Positionsgebers (46, 48) redundant über eine Busverbindung (52), insbesondere über einen in dem Kraftfahrzeug vorhandenen CAN-Datenbus, an die zumindest eine Steuereinheit (50) übertragen werden.

11. Vorrichtung nach einem der Ansprüche 1 bis 10, **dadurch gekennzeichnet, dass** der ersten und zweiten Bedieneinrichtung (40, 42) zur redundanten Ansteuerung des ersten und zweiten elektrischen Stellmittels (36, 38) voneinander unabhängige Steuereinheiten (50, 60) zugeordnet sind.

12. Vorrichtung nach einem der Ansprüche 1 bis 11, **dadurch gekennzeichnet, dass** die Steuereinheiten (50, 60) über eine Busverbindung (52), insbesondere über einen in dem Kraftfahrzeug vorhandenen CAN-Datenbus, miteinander kommunizieren.

13. Vorrichtung nach einem der Ansprüche 1 bis 12, **dadurch gekennzeichnet, dass** die Bedieneinrichtungen (40, 42), die Steuereinheiten (50, 60) und/oder die elektrischen Stellmittel (36, 38) aus zumindest zwei voneinander unabhängigen Stromversorgungszweigen (78, 80) gespeist werden.

14. Vorrichtung nach einem der Ansprüche 1 bis 13, **dadurch gekennzeichnet, dass** zumindest ein Radrehzahlsensor (56, 72) zur Erfassung des momentanen Bewegungszustands des Kraftfahrzeugs vorgesehen ist, wobei die zumindest eine Steuereinheit (50) die Parksperre (12) ausschließlich dann aus der ausgerückten in die eingerückte Position versetzt, wenn sich aufgrund einer von dem zumindest einen Raddrehzahlsensor (56, 72) bereitgestellten Drehzahlinformation ergibt, dass sich das Kraftfahrzeug im Stillstand befindet.

15. Vorrichtung nach einem der Ansprüche 1 bis 14, **dadurch gekennzeichnet, dass** mehrere Raddrehzahlsensoren (56, 72) vorgesehen sind, wobei die zumindest eine Steuereinheit (50) die von den Raddrehzahlsensoren (56, 72) bereitgestellten Drehzahlinformationen zum Zwecke ihrer gegenseitigen Verifizierung miteinander vergleicht.

16. Kraftfahrzeug, insbesondere landwirtschaftliches oder industrielles Nutzfahrzeug, mit einer Vorrichtung (10) nach einem der Ansprüche 1 bis 15.

## Claims

1. Apparatus for controlling a parking brake for a motor vehicle, having a first operator control device (40) and at least one control unit (50, 60), wherein the at least one control unit (50) puts the parking brake (12) into a disengaged position by actuating a first electrical actuating means (36) when it recognizes a release request on the first operator control device (40), **characterized in that** the at least one control unit (60) puts the parking brake (12) into the disengaged position redundantly by actuating a second electrical actuating means (38), which is independent of the first electrical actuating means (36), when it recognizes an emergency release request on a second operator control device (42).

2. Apparatus according to Claim 1, **characterized in that** the motor vehicle is provided with an externally accessible auxiliary power connection (88) which can be used to supply power to the at least one control unit (60) together with the second operator control device (42) and/or the second electrical actuating means (38).

3. Apparatus according to Claim 1 or 2, **characterized in that** the first and/or second operator control device (40, 42) comprises a drive-position selector lever (44) which can be put into at least one neutral, park or drive position and which interacts with a vehicle transmission, wherein at least one position sensor (46, 48, 58) indicating the instantaneous position of the drive-position selector lever (44) is provided.

4. Apparatus according to one of Claims 1 to 3, **characterized in that** the at least one control unit (50) infers the presence of a release request when a position information item provided by the position sensor (46, 48) reveals that the drive-position selector lever (44) is being moved from the park position to the neutral position.

5. Apparatus according to one of Claims 1 to 4, **characterized in that** the first operator control device (40) has at least one first position sensor (46), indicating the park position of the drive-position selector lever (44), and a second position sensor (48), indicating the neutral position of the drive-position selector lever (44), wherein the at least one control unit (50) compares the position information items provided by the two position sensors (46, 48) with one another in order to verify the instantaneous position of the drive-position selector lever (44).

6. Apparatus according to one of Claims 1 to 5, **characterized in that** the at least one control unit (60) infers the presence of an emergency release request when the second operator control device (42) is operated in compliance with a prescribed operator control sequence.

7. Apparatus according to one of Claims 1 to 6, **characterized in that** the second operator control device (42) comprises an operator control pedal (62) which interacts with a transmission clutch and/or a vehicle brake system, wherein at least one operation sensor (64) sensing the instantaneous operation state of the operator control pedal (62) is provided.

8. Apparatus according to one of Claims 1 to 7, **characterized in that** the second operator control device (42) has a third position sensor (58) indicating the park and/or neutral position of the drive-position selector lever (44), wherein the at least one control unit (60) infers the presence of an emergency release request when a position information item, provided by the third position sensor (58), in conjunction with an operation information item, provided by the operation sensor (64), reveals that the drive-position selector lever (44) is being moved from the park position into the neutral position at the same time as the operator control pedal (62) is being operated by the driver.

9. Apparatus according to one of Claims 1 to 8, **characterized in that** the at least one control unit (60) puts the parking brake (12) into the disengaged position exclusively when it is in a manually selectable emergency release mode.

10. Apparatus according to one of Claims 1 to 9, **characterized in that** the position information items from the first and second position sensors (46, 48) are transmitted redundantly via a bus connection (52), particularly via a CAN data bus which is present in the motor vehicle, to the at least one control unit (50).

11. Apparatus according to one of Claims 1 to 10, **characterized in that** the first and second operator control devices (40, 42) have mutually independent control units (50, 60) associated with them for the purpose of redundantly actuating the first and second electrical actuating means (36, 38).

12. Apparatus according to one of Claims 1 to 11, **characterized in that** the control units (50, 60) communicate with one another via a bus connection (52), particularly via a CAN data bus which is present in the motor vehicle.

13. Apparatus according to one of Claims 1 to 12, **characterized in that** the operator control devices (40, 42), the control units (50, 60) and/or the electrical actuating means (36, 38) are powered from at least two mutually independent power supply paths (78, 80).

14. Apparatus according to one of Claims 1 to 13, **characterized in that** at least one wheel speed sensor (56, 72) for sensing the instantaneous motion state of the motor vehicle is provided, wherein the at least one control unit (50) puts the parking brake (12) into the engaged position from the disengaged position exclusively when a speed information item provided by the at least one wheel speed sensor (56, 72) reveals that the motor vehicle is stationary.

15. Apparatus according to one of Claims 1 to 14, **characterized in that** a plurality of wheel speed sensors (56, 72) are provided, wherein the at least one control unit (50) compares the speed information items provided by the wheel speed sensors (56, 72) with one another for the purpose of reciprocal verification of said speed information items.

16. Motor vehicle, particularly agricultural or industrial commercial vehicle, having an apparatus (10) according to one of Claims 1 to 15.

## Revendications

1. Dispositif de commande d'un frein de stationnement pour un véhicule automobile, comprenant un premier organe de manoeuvre (40) et au moins une unité de commande (50, 60), ladite unité de commande (50) amenant le frein de stationnement (12) dans une position désaccouplée en commandant un premier moyen de positionnement électrique (36) en cas de détection d'un souhait de déverrouillage présent au niveau du premier organe de manoeuvre (40), **caractérisé en ce que** ladite unité de commande (60) déplace le frein de stationnement (12) dans la position désaccouplée de manière redondante en cas de détection d'un souhait de déverrouillage d'urgence présent au niveau d'un deuxième organe de manoeuvre (42) en commandant un deuxième moyen de positionnement électrique (38) indépendant du premier moyen de positionnement électrique (36).

2. Dispositif selon la revendication 1, **caractérisé en ce qu'**une borne électrique auxiliaire (88) accessible depuis l'extérieur est prévue sur le véhicule automobile, par le biais de laquelle il est possible d'alimenter électriquement ladite unité de commande (60) conjointement avec le deuxième organe de manoeuvre (42) et/ou le deuxième moyen de positionnement électrique (38).

3. Dispositif selon la revendication 1 ou 2, **caractérisé en ce que** le premier et/ou le deuxième organe de manoeuvre (40, 42) comprend un levier de sélection de palier de marche (44) qui peut être amené au moins dans une position neutre, de stationnement ou de marche et qui interagit avec une boîte de vitesses de véhicule, au moins un codeur de position (46, 48, 58) qui indice la position momentanée du levier de sélection de palier de marche (44) étant prévu.

4. Dispositif selon l'une des revendications 1 à 3, **caractérisé en ce que** ladite unité de commande (50) déduit la présence d'un souhait de déverrouillage lorsqu'il résulte d'une information de position fournie par le codeur de position (46, 48) que le levier de sélection de palier de marche (44) est amené de la position de stationnement à la position neutre.

5. Dispositif selon l'une des revendications 1 à 4, **caractérisé en ce que** le premier organe de manoeuvre (40) présente au moins un premier codeur de position (46) qui indice la position de stationnement du levier de sélection de palier de marche (44) et un deuxième codeur de position (48) qui indice la position neutre du levier de sélection de palier de marche (44), ladite unité de commande (50) comparant entre elles les informations de position fournies par les deux codeurs de position (46, 48) pour vérifier la position momentanée du levier de sélection de palier de marche (44).

6. Dispositif selon l'une des revendications 1 à 5, **caractérisé en ce que** ladite unité de commande (60) déduit la présence d'un souhait de déverrouillage d'urgence lorsque le deuxième organe de manoeuvre (42) est actionné en observant une séquence de manoeuvre prédéfinie.

7. Dispositif selon l'une des revendications 1 à 6, **caractérisé en ce que** le deuxième organe de manoeuvre (42) comprend une pédale de manoeuvre (62) qui interagit avec un accouplement de boîte de vitesses et/ou un circuit de freinage de véhicule, au moins un codeur d'actionnement (64) qui détecte un état d'actionnement momentané de la pédale de manoeuvre (62) étant prévu.

8. Dispositif selon l'une des revendications 1 à 7, **caractérisé en ce que** le deuxième organe de manoeuvre (42) présente un troisième codeur de position (58) qui indice au moins la position de stationnement et/ou neutre du levier de sélection de palier de marche (44), ladite unité de commande (60) déduisant la présence d'un souhait de déverrouillage d'urgence lorsqu'il résulte d'une information de position fournie par le troisième codeur de position (58), combinée avec une information d'actionnement fournie par le codeur d'actionnement (64), que le levier de sélection de palier de marche (44) est amené de la position de stationnement à la position neutre avec actionnement simultané par le conducteur de la pédale de manoeuvre (62).

9. Dispositif selon l'une des revendications 1 à 8, **caractérisé en ce que** ladite unité de commande (60) amène exclusivement le frein de stationnement (12) en position désaccouplée si celui-ci se trouve dans un mode de déverrouillage d'urgence pouvant être sélectionné manuellement.

10. Dispositif selon l'une des revendications 1 à 9, **caractérisé en ce que** les informations de position du premier et du deuxième codeur de position (46, 48) sont transmises de manière redondante à ladite unité de commande (50) par le biais d'une liaison par bus (52), notamment par le biais d'un bus de données CAN présent dans le véhicule automobile.

11. Dispositif selon l'une des revendications 1 à 10, **caractérisé en ce que** le premier et le deuxième organe de manoeuvre (40, 42) sont associées à des unités de commande (50, 60) indépendantes l'une de l'autre pour la commande redondante du premier et du deuxième moyen de positionnement électrique (36, 38).

12. Dispositif selon l'une des revendications 1 à 11, **caractérisé en ce que** les unités de commande (50, 60) communiquent entre elles par le biais d'une liaison par bus (52), notamment par le biais d'un bus de données CAN présent dans le véhicule automobile.

13. Dispositif selon l'une des revendications 1 à 12, **caractérisé en ce que** les organes de manoeuvre (40, 42), les unités de commande (50, 60) et/ou les moyens de positionnement électriques (36, 38) sont alimentés à partir d'au moins deux branches d'alimentation électrique (78, 80) indépendantes l'une de l'autre.

14. Dispositif selon l'une des revendications 1 à 13, **caractérisé en ce qu'**il est prévu au moins un capteur de vitesse de rotation de roue (56, 72) pour détecter l'état de mouvement momentané du véhicule automobile, ladite unité de commande (50) n'amenant le frein de stationnement (12) de la position désaccouplée à la position engagée que s'il résulte d'une information de vitesse de rotation fournie par ledit capteur de vitesse de rotation de roue (56, 72) que le véhicule se trouve à l'arrêt.

15. Dispositif selon l'une des revendications 1 à 14, caractérisé en ce plusieurs capteurs de vitesse de rotation de roue (56, 72) sont prévus, ladite unité de commande (50) comparant entre elles les informations de vitesse de rotation fournies par les capteurs de vitesse de rotation de roue (56, 72) en vue de leur vérification réciproque.

16. Véhicule automobile, notamment véhicule utilitaire agricole ou industriel, équipé d'un dispositif (10) selon l'une des revendications 1 à 15.
